# EUROPEAN PATENT APPLICATION

(11) **EP 1 725 060 A1**
(43) Date of publication of application: **22.11.2006**
(21) Application number: 05703867.1
(22) Date of filing: 20.01.2005
(51) Int. Cl.: H04Q 7/38

(54) **WIRELESS IP TELEPHONE UNIT**

(30) Priority: 12.03.2004 JP 2004070460
(71) Applicant: SANYO ELECTRIC CO., LTD., Moriguchi-shi, Osaka 570-8677 (JP); Tottori Sanyo Electric Co., Ltd., Tottori 680-8634 (JP)
(72) Inventor: KAKIMOTO, Masashi, Tottori Sanyo Electric CO., Ltd, Tottori-Shi, Tottori 6808634 (JP)
(74) Representative: Glawe, Delfs, Moll
(86) International application number: PCT/JP2005/000639
(87) International publication number: WO 2005/089008

(57) **Abstract**

Provided is a wireless IP telephone set that, even when packet loss frequently occurs during a telephone call, keeps deterioration in audio quality to a minimum, permitting the telephone call to be continued without being interrupted. The wireless IP telephone set has a plurality of codecs. In a case where audio packet loss exceeds a predetermined value during a telephone call, switching to a lower bitrate codec is performed in different stages. In a case where there is no lower bitrate codec, a transfer request to a previously set transfer destination is transmitted.

## Description

### Technical Field

The present invention relates to a wireless IP telephone set that has a plurality of codecs and performs wireless communications.

### Background Art

In recent years, VoIP (Voice over Internet Protocol) systems, so-called IP telephony systems have come to be used increasingly widely. In these IP telephony systems, voice signals to be transmitted to a called party are converted into digital signals, and are then sent as packets. Here, a transfer rate is determined depending on the speed of a communication line. When the communication line is a high-speed line, large volumes of data can be transmitted, permitting high-quality sound to be transmitted. Incidentally, in determining a transfer rate, it is selected from among audio codecs common to both calling and called parties.

Patent Document 1 discloses a terminal device that optimizes a transmission audio mode when an information transfer rate of a communication path changes. By switching an audio codec to be used to an appropriate audio codec depending on a change in a communication state, a transfer rate to be allocated to image information transfer is prevented from becoming extremely low.
Patent Document 1: JP-A-H7-123172

### Disclosure of the Invention

### Problems to be Solved by the Invention

As a result of being designed for use in TV telephones or video conference systems, the terminal device disclosed in Patent Document 1 switches an audio codec to allocate a transfer rate to image information transfer, with no consideration given to the possibility that voice communication becomes impossible due to frequent occurrence of packet loss.

In general, the use of a wireless terminal as a terminal for an IP telephone set often causes packet loss. This becomes an important challenge when, for example, an IP telephony function is added to cellular phone handsets that have already been widespread.

It is an object of the present invention to provide a wireless IP telephone set that, even when packet loss frequently occurs during a telephone call, keeps deterioration in audio quality to a minimum, permitting the telephone call to be continued without being interrupted.

### Means for Solving the Problem

To achieve the above object, according to the present invention, in a wireless IP telephone set having a plurality of codecs and performing wireless communications, in a case where audio packet loss exceeds a predetermined value during a telephone call, switching to a lower bitrate codec is performed.

In the wireless IP telephone set described above, the switching of a codec is performed in different stages.

In the wireless IP telephone set described above, in a case where there is no lower bitrate codec when the packet loss exceeds the predetermined value, a transfer request to a previously set transfer destination is transmitted.

In the wireless IP telephone set described above, the wireless IP telephone has a function as a cellular phone handset, and the transfer destination is a telephone number of the cellular phone handset.

### Advantages of the Invention

According to the present invention, in a case where audio quality deteriorates on a wireless IP telephone set side as a result of the packet loss exceeding a predetermined value, the audio codec is switched in different stages. This ensures that a telephone call is continued with as high audio quality as possible without being interrupted. Moreover, in a case where there is no lower bitrate audio codec when the packet loss exceeds the predetermined value, a telephone call is transferred to a telephone number of a cellular phone, for example. This permits the user of the wireless IP telephone set to continue a telephone call.

### Brief Description of Drawings

[Fig. 1] A block diagram showing the structure of a VoIP system.
[FIG. 2] A sequence diagram showing an operation of the VoIP system.

### List of Reference Symbols

- 10: VoIP system
- 11: wireless LAN
- 12a to 12d: wireless IP telephone sets
- 13: gateway
- 14: SIP server
- 15: public switching telephone network
- 16: network

### Best Mode for Carrying Out the Invention

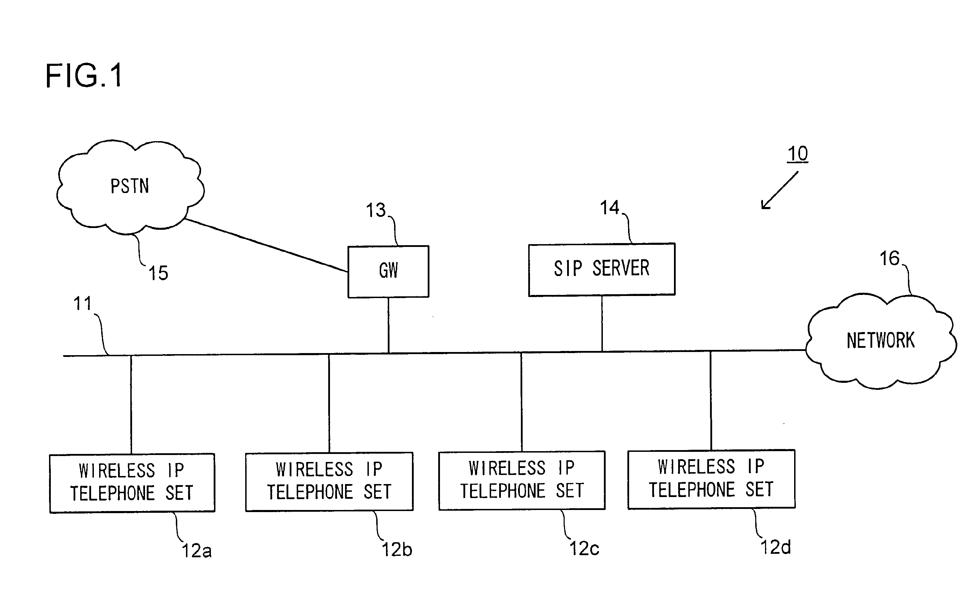

Hereinafter, an SIP (session initiation protocol) will be described as an example of a call control protocol. FIG. 1 is a block diagram showing the structure of a VoIP system. A VoIP system 10 is built with a wireless LAN 11, wireless IP telephone sets 12a to 12d connected to the wireless LAN 11, a gateway (hereinafter, a "GW") 13 connected to the wireless LAN 11, and an SIP server 14 connected to the wireless LAN 11. The GW 13 is connected to a public switching telephone network (hereinafter, a "PSTN") 15. The wireless LAN 11 is connected to a network 16 such as a VPN (virtual private network) or the Internet.

The wireless IP telephone sets 12a to 12d have their own telephone numbers and IP addresses, and each remember IP addresses of the GW 13 and the SIP server 14. The wireless IP telephone sets 12a to 12d each have a plurality of audio codecs, and can communicate with each other by using a common audio codec.

The GW 13 is used for connection with an exchange (not shown) of the PSTN 15, and is provided with a call control function and an audio encoding function. When a telephone call is made between one of the IP telephone sets 12a to 12d and a fixed-line telephone (not shown) connected to the PSTN 15, call control is performed via the SIP server 14, the GW 13, and the PSTN 15.

The SIP server 14 performs number translation, thereby associating a telephone number with an IP address. When an incoming call is received, the SIP server 14 specifies an IP telephone set having an IP address associated with the telephone number, and notifies the specified IP telephone set of the incoming call. In a case where a telephone call is made between two of the IP telephone sets 12a to 12d or connection is made via the network 16, such a call or connection is established only through the SIP server 14, bypassing the GW 13.

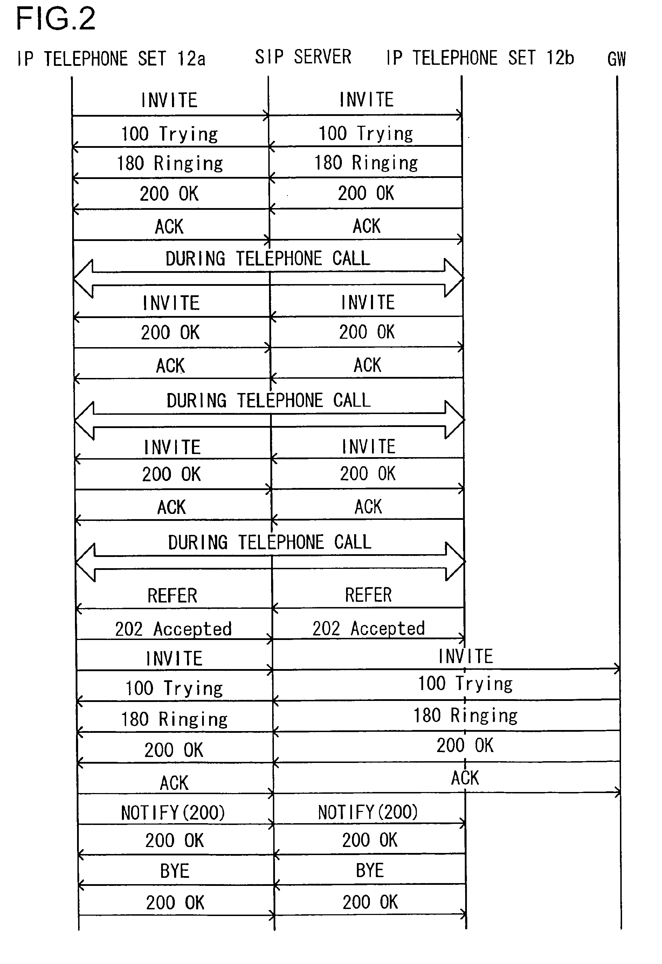

FIG. 2 is a sequence diagram showing an operation of the VoIP system. Here, the operation thereof will be described, taking up as an example a case in which a telephone call is made from the IP telephone set 12a to the IP telephone set 12b.

When an outgoing call (Initial INVITE) is made from the IP telephone set 12a to the IP telephone set 12b via the SIP server 14, the IP telephone set 12b responds thereto by sending back, via the SIP server 14, 100 Trying, 180 Ringing, and 200 OK to the IP telephone set 12a. Upon the IP telephone set 12b receiving ACK transmitted from the IP telephone set 12a, a telephone call is started between them. Here, an SDP description for determining, for example, an audio codec for this session is added to the Initial INVITE message. That is, a list of a plurality of audio codecs of the IP telephone set 12a is added thereto. The IP telephone set 12b selects a single audio codec from among the plurality of audio codecs and adds it to the 200 OK message to be sent back as a response. In this way, an audio codec to be used for this call is determined.

Used as the audio codec is, for example, G.711, G.726, G.729, or G.723.1 defined as standards in the ITU-TG series recommendations. The bitrates (data transfer rates) of G.711, G.726, G.729, and G.723.1 are 64 kbps, 32 kbps, 8 kbps, and 6.3 kbps, respectively, as required according to the specifications. Here, a bitrate is a bandwidth required to perform communication. Thus, a lower bitrate audio codec makes it possible to perform communication with an ample bandwidth margin and fewer packet losses. For example, in a case where communication is performed with little or no bandwidth margin and an overflow occurs at heavy traffic hours, packet losses increase sharply. On the other hand, the fewer the packet losses, the less likely the telephone call is interrupted. G.711 is not compressed, and, for G.726, G.729, and G.723.1, the lower the bitrate, the greater the compression rate. The greater the compression rate, the smaller amount of data is transferred as a whole, the smaller number of packets is transferred within a given period of time, and the lower the bitrate. The lower the compression rate, the closer the decoded sound to the original sound. Thus, if there is no packet loss, it is preferable to use an audio codec having a lower compression rate. For higher audio quality, it is necessary to select an audio codec with fewer packet losses and a lower compression rate.

During the telephone call, a DSP (digital signal processor) built in the IP telephone set 12b makes a counter provided therein count packets that are being transmitted at regular intervals (for example, every 20 msecs) while converting the packets thus received into analog audio. In this way, delay or loss of packets is detected.

If the packet loss exceeds a predetermined value during the telephone call, the IP telephone set 12b transmits re-INVITE for requesting switching of the audio codec to the IP telephone set 12a via the SIP server 14. The re-INVITE message includes only a description of the audio codec that is desired to be changed. It is to be noted that the predetermined value for the packet loss may be set at a value at which the audio quality begins to deteriorate. For example, until the packet loss is of the order of 1 %, G.711 permits the telephone call to be continued with the same audio quality as if there were no packet loss. Likewise, G.729 can tolerate up to of the order of 5 % packet loss. Thus, the predetermined value for the packet loss may be set in a range from about 1 to 5 %.

The IP telephone set 12a that has received re-INVITE returns 200 OK. In response to this, the IP telephone set 12b transmits ACK. In this way, switching of the audio codec is completed. The audio codec can be switched from a higher bitrate codec to a lower bitrate codec, that is, the audio codec can be switched so that the compression rate becomes lower and the amount of data becomes smaller. Assume that, for example, G.711 is initially used. Then, it may be switched to G.726, for example. If the IP telephone set 12a that has received re-INVITE does not have a specified audio codec, it returns an error code. The IP telephone set 12b that has received the error code specifies another audio codec, and repeats this process until 200 OK is returned thereto. If 200 OK is not returned thereto, the IP telephone set 12b transmits a transfer request, which will be described later.

After switching of the audio codec is completed, if the packet loss is detected to exceed the predetermined value again during the telephone call, the audio codec is switched to a still lower bitrate audio codec in the same manner as described above. Assume that, for example, G.726 is used at that time. Then, it is switched to G.729, for example. If the packet loss nevertheless exceeds the predetermined value, the audio codec can be switched to G.723.1.

In a case where there is no still lower bitrate audio codec when the packet loss exceeds the predetermined value, the IP telephone set 12b transmits, via the SIP server 14, a transfer request (REFER) to the IP telephone set 12a so that the telephone call is transferred to a previously set transfer destination. In response to this, the IP telephone set 12a returns 202 Accepted, thereby accepting the transfer request. The transfer destination may be a network formed of fixed-line telephones or cellular phone handsets other than wireless IP telephones. For example, in a case where the IP telephone set 12b involved in the telephone call has a function as a cellular phone handset, it is possible to set a telephone number of the cellular phone handset as a transfer destination.

In a case where the transfer destination is a telephone number of the cellular phone handset of the IP telephone set 12b, the IP telephone set 12a makes an outgoing call (INVITE) to the telephone number of the cellular phone handset of the IP telephone set 12b. This call is made through the PSTN 15 by way of the SIP server 14 and the GW 13. The IP telephone set 12b that has received INVITE automatically returns 100 Trying, 180 Ringing, and 200 OK. Then, the IP telephone set 12a transmits ACK, whereby a telephone call is started between them. In this way, switching from the IP telephone to the cellular phone is smoothly performed without the voice communication being interrupted on the IP telephone set 12b side.

On the other hand, in a case where the transfer destination is a telephone number other than that of the IP telephone set 12b, the IP telephone set 12a makes an outgoing call (INVITE) to the telephone number of the transfer destination. This call is made by way of the SIP server 14 and the GW 13. Upon receiving INVITE, the telephone set specified as the transfer destination rings, and, when the telephone receiver is picked up, returns 100 Trying, 180 Ringing, and 200 OK. Upon the transfer destination telephone set receiving ACK transmitted from the IP telephone set 12a, a telephone call is started between them. This permits the user of the IP telephone set 12b to continue a telephone call with the telephone set specified as the transfer destination.

Then, the IP telephone set 12a transmits, via the SIP server 14, to the IP telephone set 12b NOTIFY indicating completion of transfer. In response to this, the IP telephone set 12b returns 200 OK and BYE. Finally, the IP telephone set 12a returns 200 OK, whereby the telephone call between the IP telephone set 12a and the IP telephone set 12b is disconnected.

As described above, in a case where audio quality deteriorates on a wireless IP telephone set side as a result of the packet loss exceeding a predetermined value, the audio codec is switched in different stages. This ensures that a telephone call is continued with as high audio quality as possible without being interrupted. Moreover, in a case where there is no lower bitrate audio codec when the packet loss exceeds the predetermined value, a telephone call is transferred to a telephone number of a cellular phone, for example. This permits the user of the wireless IP telephone set to continue a telephone call.

The embodiment described above deals with a case in which a telephone call is made from the IP telephone set 12a; however, a telephone call may be made from other telephone sets via the PSTN 15, or made from other IP telephone sets via the network 16. In a case where a telephone call is made through the PSTN 15, it goes through the GW 13 between the SIP server 14 and the PSTN 15.

### Industrial Applicability

A wireless IP telephone set according to the present invention simply has to have a plurality of audio codecs, and, combined with a cellular phone handset, it offers enhanced convenience. Used as the call control protocol is, for example, H.323, SIP, or MEGACO.

## Claims

**1.** A wireless IP telephone set having a plurality of codecs and performing wireless communications, wherein
in a case where audio packet loss exceeds a predetermined value during a telephone call, switching to a lower bitrate codec is performed.

**2.** The wireless IP telephone set of claim 1, wherein
the switching of a codec is performed in different stages.

**3.** The wireless IP telephone set of claim 1 or 2, wherein
in a case where there is no lower bitrate codec when the packet loss exceeds the predetermined value, a transfer request to a previously set transfer destination is transmitted.

**4.** The wireless IP telephone set of claim 3, wherein
the wireless IP telephone has a function as a cellular phone handset, and
the transfer destination is a telephone number of the cellular phone handset.

## Amended claims

### Amended claims under Art. 19.1 PCT

**1.** Cancelled)

**2.** Cancelled)

**3.** Amended) A wireless IP telephone set having a plurality of codecs and performing wireless communications, wherein
in a case where audio packet loss exceeds a predetermined value during a telephone call, switching to a lower bitrate codec is performed, and
in a case where there is no lower bitrate codec when the packet loss exceeds the predetermined value, a transfer request to a previously set transfer destination is transmitted.

**4.** The wireless IP telephone set of claim 3, wherein
the wireless IP telephone has a function as a cellular phone handset, and
the transfer destination is a telephone number of the cellular phone handset.
